# EUROPÄISCHE PATENTSCHRIFT

(11) **EP 2 404 694 B1**
(45) Veröffentlichungstag und Bekanntmachung des Hinweises auf die Patenterteilung: **14.11.2012**
(21) Anmeldenummer: 11004812.1
(22) Anmeldetag: 11.06.2011
(51) Int. Cl.: B23D 59/00

(54) **Einrichtung zur Überwachung einer Öffnungsweite**
Device for monitoring an opening
Dispositif destiné à la surveillance d' une largeur d'ouverture

(30) Priorität: 06.07.2010 AT 11382010
(43) Veröffentlichungstag der Anmeldung: 11.01.2012
(73) Patentinhaber: Schelling Anlagenbau GmbH, 6858 Schwarzach (AT)
(72) Erfinder: Pöschl, Wolfgang, 6844 Altach (AT); Walch, Alexander, 6850 Dornbirn (AT)
(74) Vertreter: Fechner, Thomas

(56) Entgegenhaltungen:
- DE-A1- 2 641 255
- DE-A1- 3 238 809
- DE-A1- 10 026 408
- DE-A1- 19 828 749

## Beschreibung

Die vorliegende Erfindung betrifft das Problem eines sich während des Sägevorgangs einer Sägeeinrichtung einengenden Schnittkanals im zu zersägenden Werkstück, in welchem das den Sägevorgang an sich durchführende Sägewerkzeug der Sägeeinrichtung Gefahr läuft, eingeklemmt zu werden.

Bei dem Zersägen von Werkstücken, insbesondere aus Metallen wie z. B. Aluminium, Buntmetallen, Stahl oder Titan werden in diesen Werkstücken mehr oder weniger Spannungen frei. Beim Aufteilen bzw. Zersägen dieser Werkstücke mittels des Sägewerkzeuges führen diese inneren Spannungen in diesen Werkstücken dazu, dass sich die Werkstücke während des Sägens verformen und sich dadurch der Schnittkanal bzw. Sägespalt ausweiten oder verjüngen kann. Die genannten Spannungen werden bereits beim Eintritt des Sägewerkzeugs in das zu zersägende Werkstück frei, wodurch es bei einer Verjüngung des Schnittkanals zum Verklemmen des Sägewerkzeugs im Schnittkanal kommen kann. Je nach Schnittlänge und nach Größe des sich im Werkstück bzw. im bereits gesägten Schnittkanal befindenden Segmentes des Sägewerkzeuges kann es dazu kommen, dass das Sägewerkzeug vom Werkstück festgeklemmt wird. Dies kann zu Schäden am Sägewerkzeug und/oder an anderen Teilen der Sägeeinrichtung führen.

Besonders kritisch ist dies bei Sägewerkzeugen wie z. B. Kreissägeblättern oder Bandsägen, welche ein Stammblatt mit daran angeordneten Sägezähnen aufweisen. Diese Sägewerkzeuge sind üblicherweise so gestaltet, dass der erzeugte Schnittkanal breiter als das Stammblatt ist. Kommt es dazu, dass sich der Schnittkanal so weit verengt, dass das Stammblatt zwischen den beiden Flanken des Werkstückes eingeklemmt wird, so wirkt dies wie eine Art Scheibenbremse. Ein Einklemmen des Stammblattes sollte, soweit möglich, in jedem Fall vermieden werden, da dies unweigerlich zu einem Festklemmen des Sägewerkzeuges und zu einem Abbruch des Schnittvorgangs führt.

Beim Stand der Technik wurde bereits versucht, dieses Problem zu lösen, indem man aufwändige Spanneinrichtungen vorsieht, welche das zu zersägende Werkstück so festklemmen sollen, dass es nicht mehr zur Verengung des Schnittkanals kommen kann. Diese Lösungen sind sehr aufwändig, da hohe Kräfte bereitgestellt werden müssen. Lösungsversuche dieser Art sind beispielsweise in der DE 32 38 809 A1 und in der DE 26 41 255 A1 offenbart.

Beim Stand der Technik ist es zur Lösung des Problems mit einem sich verengenden Schnittkanal auch bekannt, sogenannte Spaltkeile in den Schnittkanal einzuführen, so dass sich dieser nicht mehr so weit verengen kann, dass er das Sägewerkzeug festklemmt. Eine solche Lösung ist beispielsweise in der DE 198 28 749 A1 gezeigt. Sie funktioniert an sich zufriedenstellend. Die Spaltkeile können aber erst dann eingesetzt werden, wenn der Schnittkanal bereits so lang ist, dass ein Stück des Schnittkanals hinter dem Sägewerkzeug frei ist, um dort einen Spaltkeil setzen zu können. DE 198 28 749 A offenbart eine Einrichtung gemäß dem Oberbegriff des Anspruchs 1.

Insbesondere am Anfang des Sägevorgangs, wenn das Sägewerkzeug noch nicht vollständig in das zu zersägende Werkstück eingedrungen ist, kann es aber auch zu einem Verjüngen des Schnittkanals aufgrund von Spannungen im Werkstück kommen. Insbesondere für diese Situation ist bisher keine Lösung bekannt, wie man ein Festklemmen des Sägewerkzeugs im Schnittkanal im Werkstück verhindern kann.

Aufgabe der Erfindung ist es, hierfür eine Lösung vorzuschlagen.

Im Sinne der Erfindung ist hierzu eine Einrichtung zur Überwachung der Öffnungsweite eines von einem Sägewerkzeug einer Sägeeinrichtung in zumindest ein Werkstück einzusägenden Schnittkanals, wobei die Einrichtung zumindest einen ersten Arm zum Aufsetzen auf das Werkstück auf einer ersten Seite des Schnittkanals und zumindest einen zweiten Arm zum Aufsetzen auf das Werkstück auf einer der ersten Seite gegenüberliegenden zweiten Seite des Schnittkanals und eine Messeinrichtung zur Überwachung eines Abstandes zwischen dem ersten Arm und dem zweiten Arm aufweist.

Die Erfindung geht somit einen grundsätzlich anderen Weg als die oben genannten, beim Stand der Technik bekannten Lösungsversuche. Es wird nicht versucht, den Schnittkanal durch geeignete Maßnahmen entsprechend weit offen zu halten. Im Sinne der Erfindung ist vielmehr vorgesehen, die Öffnungsweite des Schnittkanals, insbesondere auch während des anfänglichen Eindringens des Sägewerkzeugs in das Werkstück am Beginn des Säge-vorgangs, zu überwachen, um rechtzeitig den Beginn eines Verringerns der Öffnungsweite im Schnittkanal feststellen zu können. Hierdurch kann insbesondere auch ein Festklemmen des Stammblattes vermieden werden. Wird eine Verjüngung des Schnittkanals festgestellt, so kann das Sägewerkzeug rechtzeitig, bevor es verklemmt wird, zurückgezogen werden, z. B. um den Sägevorgang noch einmal von vorne zu beginnen und einen entsprechend geweiteten Schnittkanal in das Werkstück einzusägen. Die Arme der Einrichtung, deren Abstand zueinander überwacht wird, sind günstigerweise relativ zueinander bewegbar miteinander verbunden. Durch das Aufsetzen der beiden Arme auf einander gegenüberliegenden Seiten des Schnittkanals auf das Werkstück wird eine Veränderung der Öffnungsweite des Schnittkanals auf die beiden Arme übertragen, was zu einer Änderung des Abstandes zwischen den Armen führt und von der Messeinrichtung festgestellt werden kann. Bei der erfindungsgemäßen Einrichtung handelt es sich bevorzugt um eine Art Messgabel. Die Arme der Einrichtung können wie die Forken einer Gabel nebeneinander angeordnet sein.

Es ist zur Überwachung des Abstandes zwischen den Armen im Sinne der Erfindung nicht zwingend notwendig, direkt den Abstand zwischen den beiden Armen zu messen. Es ist z.B. auch denkbar, den Abstand zwischen einem Arm und einem am anderen Arm fix montierten weiteren Bauteil zu messen bzw. zu überwachen. Wichtig ist lediglich, dass die tatsächlich gemessenen Abstände bzw. deren Änderungen repräsentativ für die Abstände zwischen den Armen bzw. deren Änderungen sind.

Um die Öffnungsweite des Schnittkanals von Anfang an, also ab dem Beginn des Eindringens des Sägewerkzeugs in das Werkstück überwachen zu können, sehen bevorzugte Ausgestaltungsformen der Erfindung vor, dass zwischen den Armen zumindest bereichsweise ein Spalt zum Hindurchführen eines Sägewerkzeugs , vorzugsweise in Form eines Sägeblatts, angeordnet ist. Hierdurch kann die Einrichtung unmittelbar am Anfang des in das Werkstück einzusägenden Schnittkanals auf das Werkstück aufgesetzt werden, ohne den Sägevorgang des Sägewerkzeuges zu behindern, da letzteres durch den Spalt zwischen den Armen der Einrichtung hindurchgeführt werden kann.

Bei der Messeinrichtung zur Überwachung des Abstandes zwischen dem ersten und dem zweiten Arm handelt es sich günstigerweise um eine Einrichtung zur berührungslosen Messung. Als Beispiel hierfür ist ein induktiver Abstandssensor zu nennen. Es können aber genauso gut auch auf Ultraschall- oder optischen Messungen beruhende Messeinrichtungen eingesetzt werden. Weiters können aber auch nicht berührungslos messende Messeinrichtungen wie z.B. Dehnmessstreifen eingesetzt werden.

Grundsätzlich ist es denkbar, mit der Messeinrichtung zur Überwachung des Abstandes zwischen dem ersten Arm und dem zweiten Arm immer den Absolutwert des Abstandes zu messen, um diesen dann entsprechend auszuwerten. Besonders bevorzugte Ausgestaltungsformen der Erfindung sehen aber eine Relativwertbestimmung vor. In diesem Sinne ist es günstig, wenn die Messeinrichtung eine Messeinrichtung zur Bestimmung von Änderungen des Abstandes relativ zu einem, vorzugsweise zu Beginn der Überwachung messbaren oder gemessenen, Referenzabstand ist. Damit die Arme den Änderungen der Öffnungsweite des Schnittkanals folgen können, kann vorgesehen sein, dass die Arme mittels zumindest eines elastischen bzw. zumindest eine Bewegung zwischen den Armen zulassenden, vorzugsweise ein Schwenkgelenk bildenden, Verbindungselementes miteinander verbunden sind. Ein entsprechendes, elastisches Verbindungselement lässt einerseits eine Bewegung zwischen den Armen zu und sorgt andererseits für eine elastische Rückstellkraft, die die Arme, wenn keine äußeren Kräfte mehr auf sie einwirken, in eine Ausgangsposition zurückstellt. In diesem Sinne ist es günstig, wenn das Verbindungselement ein Verschwenken und/oder ein Verschieben der Arme relativ zueinander gegen eine elastische Rückstellkraft ermöglicht. Durch das Zulassen einer Verschiebung können z. B. beim Aufsetzen der Arme auf das zu zersägende Werkstück für die Überwachung nicht relevante Unebenheiten ausgeglichen werden.

In alternativen Ausgestaltungsformen ist es, um die Bewegbarkeit der Arme relativ zueinander zu ermöglichen und andererseits auch für ihre Rückstellung zu sorgen, aber auch möglich, dass zumindest einer der Arme elastisch verbiegbar ausgebildet ist. Auch Mischformen dieser beiden genannten Varianten sind denkbar.

Bevorzugte Ausgestaltungsformen der Erfindung sehen vor, dass die Einrichtung zumindest eine unbelastete Betriebsstellung aufweist, in der ein zur Auflage am Werkstück vorgesehenes Ende eines der Arme gegenüber einem zur Auflage am Werkstück vorgesehenen Ende des anderen der Arme vorsteht. Hierdurch ist es möglich, beim Aufsetzen der Arme auf das Werkstück eventuell vorhandene Unebenheiten im Werkstück auszugleichen. Der oben genannte Referenzabstand wird günstigerweise erst dann gemessen, wenn der Aufsetzvorgang der Arme auf das Werkstück abgeschlossen ist, vorzugsweise aber vor Beginn des Sägevorgangs.

Damit die Arme beim Aufsetzen auf das Werkstück gut mit diesem in Eingriff kommen, sehen bevorzugte Ausgestaltungsformen der Erfindung vor, dass an zumindest einem, vorzugsweise an allen, der Arme, an dessen bzw. deren zur Auflage am Werkstück vorgesehenen Ende eine Spitze oder eine Reibungskontaktfläche angeordnet ist. Mittels der Spitzen oder der Reibungskontaktfläche können die Arme fest am Werkstück angreifen, so dass die Änderung der Öffnungsweite des Schnittkanals auf die Arme übertragen wird. Sind an den Armen Spitzen oder Reibungskontaktflächen angeordnet, so bilden diese jeweils die zur Auflage am Werkstück vorgesehenen Enden der Arme. Im Falle von Spitzen bestehen diese idealerweise aus einem Material, das im Vergleich zum zu sägenden Werkstück härter und/oder verschleißbeständiger ist. Beim Sägen von Stahl empfiehlt sich Hartmetall oder Diamant. Beim Sägen von Aluminium oder Kunststoffen erfüllt auch gehärteter Stahl die Anforderungen. Die Spitze(n) und die Reibungskontaktfläche(n) können einstückig aber auch als separate Teile an den Armen befestigt sein. Bei den Reibungskontaktflächen ist es denkbar, dass die Übertragung der freiwerdenden Spannungen vom Werkstück auf die Arme der Messgabel nur durch Reibung erfolgt. Dabei besitzen die Arme in Form der Reibungskontaktflächen stumpfe Enden, die z.B. raue Oberflächen oder aufgeklebte Reibbeläge aufweisen und damit die Reibung erhöhen. Der Vollständigkeit halber wird darauf hingewiesen, dass unter dem Begriff Hartmetalle insbesondere solche Metalle gemeint sind, die eine Vickershärte von 1300 und darüber aufweisen. Gehärtete Stähle hingegen weisen in der Regel Vickershärten zwischen 550 und 850 auf. Diamanten haben Vickershärten, die in der Regel jenseits der 10 000 liegen.

Ein Verfahren zur erfindungsgemäßen Überwachung der Öffnungsweite eines von einem Sägewerkzeug einer Sägeeinrichtung in zumindest ein Werkstück einzusägenden Schnittkanals sieht vor, dass ein erster Arm der erfindungsgemäßen Einrichtung auf einer ersten Seite des Schnittkanals und zumindest ein zweiter Arm der erfindungsgemäßen Einrichtung auf einer der ersten Seite gegenüberliegenden zweiten Seite des Schnittkanals auf das Werkstück aufgesetzt wird und mit einer Messeinrichtung der Abstand zwischen dem ersten Arm und dem zweiten Arm während des Sägevorgangs, insbesondere beim Einschneiden des Sägewerkzeuges in das Werkstück, überwacht wird. Günstigerweise misst die Messeinrichtung nach Aufsetzen der Arme auf das Werkstück einen Referenzabstand zwischen den Armen und bestimmt anschließend während des Sägevorgangs die Änderungen des Abstandes zwischen den Armen relativ zu dem Referenzabstand. Überschreiten die Abstandsänderungen bzw. die gemessenen Relativänderungen vorgebbare Sollwerte, so kann vorgesehen sein, dass das Sägewerkzeug aus dem Schnittkanal entfernt wird oder der Schnittvorgang anderweitig unterbrochen oder abgeändert wird, bevor es zum Verklemmen des Sägewerkzeugs im Schnittkanal kommt. Zur Umsetzung dieses Verfahrens bzw. zur Ansteuerung der Sägeeinrichtung ist günstigerweise eine Regeleinrichtung vorgesehen, welche gemessene und/oder bereits ausgewertete Signale der Messeinrichtung empfängt und dann den Sägevorgang in Abhängigkeit dieser Signale regelt.

Neben der Einrichtung zur Überwachung der Öffnungsweite des Schnittkanals an sich betrifft die Erfindung auch eine Sägeeinrichtung, insbesondere Plattenaufteilanlage, mit einer erfindungsgemäßen Einrichtung. Bei einer solchen Sägeeinrichtung kann vorgesehen sein, dass die Einrichtung vorzugsweise motorbetrieben heb- und senkbar an der Sägeeinrichtung angeordnet ist. Hierdurch kann die Einrichtung mit ihren Armen bzw. Spitzen auf das Werkstück abgesenkt und von diesem auch wieder abgehoben werden. Weiters ist es günstig, wenn die Einrichtung entlang der Schnittlinie der Sägeeinrichtung, vorzugsweise motorbetrieben, verschiebbar ist. Hierdurch kann die Einrichtung immer an den Beginn des Schnittkanals gefahren und dort auf das Werkstück abgesenkt bzw. an dieses angelegt werden. Insbesondere ist es günstig, wenn die Einrichtung zumindest im Bereich des Eintritts des Sägewerkzeuges der Sägeeinrichtung in das Werkstück anordenbar ist.

Bei dem Werkstück kann es sich um Einzelwerkstücke wie z. B. einzelne Platten aber auch um anders ausgeformte Werkstücke handeln. Insbesondere wenn die Sägeeinrichtung als Plattenaufteilanlage ausgebildet ist, kommen als zu zersägendes Werkstück aber auch Plattenstapel oder Stapel von anders ausgeformten Werkstücken in Betracht.

Weitere Merkmale und Einzelheiten einer bevorzugten Ausgestaltungsform der Erfindung werden in der nachfolgenden Figurenbeschreibung erläutert. Es zeigen:
Fig. 1 einen Längsschnitt durch ein Ausführungsbeispiel einer erfindungsgemäßen Einrichtung;
Fig. 2 einen schematisierten Schnitt in einer Ebene normal zur Schnittlinie durch eine Sägeeinrichtung mit einer erfindungsgemäßen Einrichtung gem. Fig. 1;
Fig. 3 einen schematisierte Seitenansicht auf einen Teilbereich der Sägeeinrichtung aus Fig. 2;
Fig. 4 einen Längsschnitt durch ein für die Einrichtung gem. Fig. 1 geeignetes elastisches Verbindungselement;
Fig. 5 bis 8 verschiedene Zwischenstadien beim Einschneiden des Sägewerkzeugs in das Werkstück;
Fig. 9 bis 11 den Fig. 5 bis 8 zugeordnete Verläufe der vom Antrieb des Sägewerkzeugs aufgenommenen Antriebsleistung und
Fig. 12 und 13 Detaildarstellungen zu einem als Kreissägeblatt ausgeführten Sägewerkzeug.

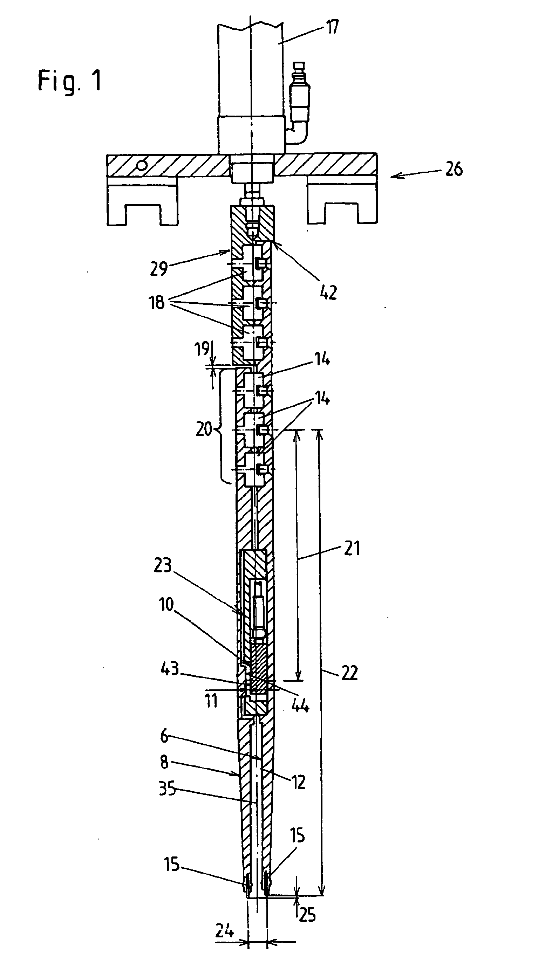

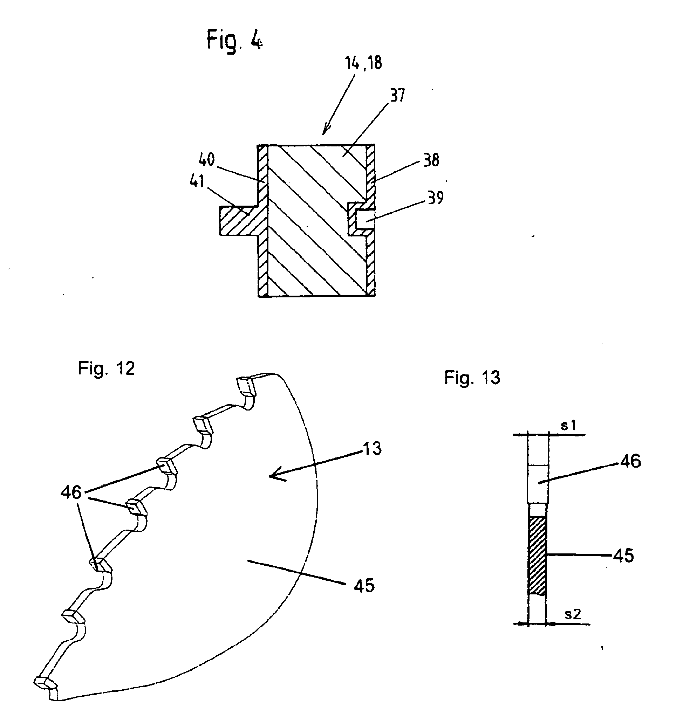

In Fig. 1 ist ein erfindungsgemäßes Ausführungsbeispiel einer Einrichtung 1 in einem Vertikalschnitt dargestellt. An einem Aktuator 17 zum Anheben und oder Absenken der Einrichtung 1 ist das zumindest im Wesentlichen steife Halteteil 29 befestigt. Im gezeigten Ausführungsbeispiel wird der Aktuator 17 von einer Horizontalführung 26 getragen, welche anhand der nachfolgenden Figuren noch genauer erläutert wird. Am Halteteil 29 ist der erste Arm 6 mittels der elastischen Verbindungselemente 18 befestigt. Der erste Arm 6 ist dabei im Bereich 42 im gezeigten Ausführungsbeispiel direkt am Halteteil 29 in vertikaler Richtung abgestützt. Hierbei ist darauf hinzuweisen, dass das gezeigte Ausführungsbeispiel dazu ausgelegt wird, dass die Einrichtung 1 bzw. Messgabel in vertikaler Richtung von oben auf das Werkstück angedrückt und anschließend wieder abgehoben wird. Eine elastische Befestigung des ersten Armes 6 an dem Halteteil 29, wie hier mittels der elastischen Verbindungselemente 18, ist generell günstig, um, wie weiter unten noch dargelegt, horizontale Verschiebungen des gesamten Werkstückes 4 ausgleichen zu können. Im gezeigten Ausführungsbeispiel sind die elastischen Verbindungselemente 18 genauso ausgebildet, wie die elastischen Verbindungselemente 14, mit denen der zweite Arm 8 beweglich relativ zum ersten Arm 6 an diesem befestigt ist. Einen Vertikalschnitt durch ein solches elastisches Verbindungselement 14 bzw. 18 ist in Fig. 4 gezeigt. Das elastische Verbindungselement 14 bzw. 18 weist jeweils eine Grundplatte 38 und eine Deckplatte 40 auf. Zwischen Grundplatte 38 und Deckplatte 40 befindet sich elastisches Material 37 wie z. B. Gummi oder ein anderes Elastomer. Zur Befestigung an einem anderen Bauteil weist die Grundplatte 38 im gezeigten Ausführungsbeispiel eine Aufnahme 39 auf, in die z. B. eine Schraube eingeschraubt werden kann. Bei dem dargelegten Beispiel ist an der Deck-platte 40 ein Zapfen 41 befestigt, welcher, wie in Fig. 1 zu sehen, ebenfalls der Befestigung dient. Die an den Platten 38 und 40 angebrachten Befestigungselemente 39 und 41 können natürlich auch anders ausgestaltet sein. Jedenfalls ermöglicht das elastische Verbindungselement 14 bzw. 18 eine elastische Bewegung zwischen Grundplatte 38 und Deckplatte 40 bzw. den daran fix angeordneten anderen Bauteilen sowohl in vertikaler als auch in horizontaler Richtung. Darüber hinaus ist auch ein Verschwenken der beiden Platten 38 und 40 und damit auch der daran befestigten Bauteile gegeneinander möglich. Im dargestellten Ausführungsbeispiel gem. Fig. 1 sind sowohl zwischen Halteteil 29 und erstem Arm 6 als auch zwischen den Armen 6 und 8 jeweils drei elastische Verbindungselemente 14 bzw. 18 angeordnet. Dies ist natürlich nur ein Ausführungsbeispiel. Es kann sich auch um mehr oder weniger elastische Verbindungselemente handeln, darüber hinaus können die elastischen Verbindungselemente natürlich auch, anders als in Fig. 4 dargestellt, ausgebildet sein. Günstig ist dabei aber jedenfalls vorzusehen, dass die elastischen Verbindungselemente 14 bzw. 18 sowohl eine horizontale als auch vertikale als auch eine Schwenkbewegung ermöglichen. Im gezeigten Ausführungsbeispiel ist am ersten Arm 1 die Messeinrichtung 10 fix angeordnet. Im gezeigten Ausführungsbeispiel handelt es sich bei der Messeinrichtung 10 um einen induktiven Sensor zur berührungslosen Messung des Abstandes 11 zwischen dem ersten Arm 6 und dem zweiten Arm 8. Von dieser so ausgestalteten Messeinrichtung 10 wird im gezeigten Ausführungsbeispiel im Wesentlichen die relative Änderung des Abstandes 11 erfasst. Der Absolutwert des Abstandes 11 ist bei der gezeigten Variante nicht weiter von Interesse. Im gezeigten Ausführungsbeispiel wird daher die Messeinrichtung 10 als Teil des ersten Armes 6, an dem sie ja fix befestigt ist, angesehen, so dass, wie hier dargestellt, eine Messung des Abstandes 11 zwischen der Messfläche 43 der Messeinrichtung 10 und der gegenüberliegenden Messfläche 44 des zweiten Armes 8 für eine Messung des Abstandes 11 zwischen erstem Arm 6 und zweiten Arm 8 bzw. dessen Änderungen repräsentativ ist.

Zum Schutz der Messeinrichtung 10 ist im gezeigten Ausführungsbeispiel eine Schutzabdeckung 23 vorgesehen. Diese muss bei entsprechender Auswahl und entsprechendem Einbau der Messeinrichtung 10 aber nicht zwingend vorhanden sein. Der Vollständigkeit halber wird darauf hingewiesen, dass abweichend vom gezeigten Ausführungsbeispiel natürlich auch andere Arten von Messeinrichtungen 10 zur Überwachung eines, wo auch immer gemessenen Abstandes 11 zwischen erstem Arm 6 und zweiten Arm 8 vorgesehen sein können. Günstig ist es jedenfalls, wenn, bezogen auf die Betriebsstellung, in der die Einrichtung 1 bzw. Messgabel auf das Werkstück aufgesetzt ist, die Abstandsmessung 11 in einer Richtung parallel zur Oberfläche des Werkstücks im Bereich des Schnittkanals 5 erfolgt. Diese Richtung ist in der Regel orthogonal zur Längsachse 35 durch den Spalt 12, durch den das Sägewerkzeug 13 zwischen den Armen 6 und 8 hindurchgeführt wird. In der gezeigten Ausführungsvariante verläuft die Längsachse 35 parallel zur Vertikalen.

Bevorzugte Messeinrichtungen 10 ermöglichen eine berührungslose Messung des Abstandes 11. Es können hierzu z. B. also auch optische Messsensoren oder Ultraschallmesseinrichtungen eingesetzt werden. Es ist grundsätzlich auch denkbar, Messeinrichtungen 10 zu verwenden, die den Absolutwert des Abstandes 11 messen und auswerten. Bevorzugte Ausgestaltungsformen sehen jedoch vor, dass es sich um eine Messeinrichtung 10 zur Bestimmung von Änderungen des Abstandes 11, relativ zu einem, vorzugsweise zu Beginn der Überwachung messbaren bzw. gemessenen, Referenzabstand handelt. Auch der hier als Messeinrichtung 10 verwendete induktive Abstandssensor liefert zunächst ein absolutes Messergebnis zum Abstand. In bevorzugten Ausgestaltungsformen verhält sich das von dem induktiven Sensor abgegebene Signal in Form eines Stromwertes proportional zum gemessenen Abstand. Diese Absolutmessungen werden im gezeigten Ausführungsbeispiel aber auf den Referenzabstand bezogen, so dass es sich letztendlich bei der Messeinrichtung 10 im gezeigten Ausführungsbeispiel um eine Messeinrichtung 10 zur Bestimmung von Änderungen des Abstandes relativ zu einem vorab gemessenen Referenzabstand handelt.

Im gezeigten Ausführungsbeispiel ist unterhalb der Messeinrichtung 10 der Spalt 12 zwischen den Armen 6 und 8 angeordnet, durch welchen das Sägewerkzeug 13 hindurchgeführt werden kann. Das Sägewerkzeug 13 kann z. B. in Form eines Sägeblattes, insbesondere Kreissägeblattes, ausgebildet sein. Es handelt sich jedenfalls um das Bauteil der Sägeeinrichtung 3, welches den eigentlichen Sägevorgang ausführt und dazu direkt in das Werkstück 4 einschneidet bzw. ―sägt.

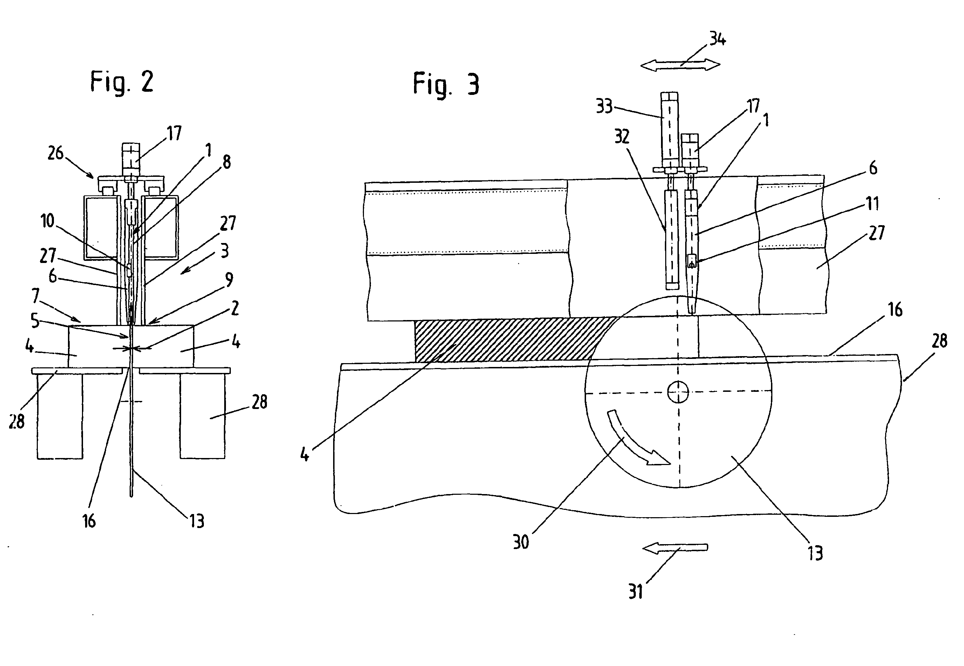

Am in der Betriebsstellung jeweils dem Werkstück 4 zugewendeten Ende der beiden Arme 6 und 8 befindet sich im gezeigten Ausführungsbeispiel jeweils eine Spitze 15, mit der die beiden Arme 6 und 8 auf das Werkstück aufgesetzt werden können. Dabei ist vorgesehen, dass der erste Arm auf einer Seite 7 des Schnittkanals 5 und der zweite Arm auf einer der ersten Seite 7 gegenüberliegenden zweiten Seite 9 des Schnittkanals 5 auf das Werkstück 4 aufgesetzt wird, wie dies besonders gut in Fig. 2 zu sehen ist. Durch das Aufsetzen der Arme 6 und 8 mittels der Spitzen 15 wird besonders gut sichergestellt, dass alle Horizontalbewegungen im Werkstück 4 auf die beiden Arme 6 und 8 übertragen werden. Insbesondere gilt dies für Änderungen der Öffnungsweite 2 des Schnittkanals 5.

Im gezeigten Ausführungsbeispiel wird der Abstand 11 nicht direkt in der Nähe der Enden der Arme 6 und 8, welche auf das Werkstück aufgesetzt werden, gemessen. Es ist vielmehr vorgesehen, dass die Abstandsmessung 11 beabstandet vom Werkstück 4 durchgeführt wird, um sicherzustellen, dass das Sägewerkzeug 13 auch im voll ausgefahrenen Zustand sich noch vollständig innerhalb des Spaltes 12 befindet und somit weder die Einrichtung 1 noch die Messeinrichtung 10 versehentlich beschädigt werden können. Im gezeigten Ausführungsbeispiel beträgt das Verhältnis des Abstandes 21 zum Abstand 22 0,54. Dabei wird der Abstand 21 von der Mitte des Befestigungsbereiches 20, in dem der zweite Arm 8 beweglich bzw. schwenkbar am ersten Arm 6 befestigt ist, und der Mitte des Bereichs, in dem die Messung des Abstandes 11 erfolgt, berechnet. Der Abstand 22 berechnet sich von der Mitte des Befestigungsbereiches 20 bis zum Ende des ersten Armes 6, mit dem dieser auf das Werkstück aufgesetzt wird. Im gezeigten Ausführungsbeispiel handelt es sich dabei um das entsprechende Ende der Spitze 15 des Armes 6. Die Mitte des Befestigungsbereiches 20 entspricht günstigerweise im Wesentlichen auch der Lage einer gedachten Schwenkachse, um die der zweite Arm 8 relativ zum ersten Arm 6 geschwenkt wird, wenn sich die Öffnungsweite 2 des Schnittkanals 5 im Betrieb der Einrichtung 1 vergrößert oder verringert.

In der in Fig. 1 dargestellten, unbelasteten Betriebsstellung, in der die Einrichtung 1 noch nicht auf das Werkstück 4 aufgesetzt ist, ist, wie im gezeigten Ausführungsbeispiel auch realisiert, vorzugsweise vorgesehen, dass ein zur Auflage am Werkstück 4 vorgesehenes Ende eines der Arme 8 oder 9 gegenüber einem zur Auflage am Werkstück 4 vorgesehenen Ende des anderen der Arme vorsteht. Im gezeigten Ausführungsbeispiel steht das Ende bzw. die Spitze 15 des zweiten Armes 8 vor. Der Vertikalabstand 25, um die der zweite Arm 8 im gezeigten Beispiel mittels seiner Spitze in der unbelasteten Betriebsstellung vorsteht, kann z. B. einen Millimeter betragen. Der Abstand 24 in Horizontalrichtung zwischen den beiden Spitzen 15 beträgt im gezeigten Ausführungsbeispiel günstigerweise zwischen 10 und 15 mm, besonders bevorzugt 13 +/- 1 mm. Der Abstand 11 muss im Messbereich der Messeinrichtung 10 liegen, welcher im gezeigten Ausführungsbeispiel 2 mm bis 5 mm beträgt.

Weiters ist im gezeigten Ausführungsbeispiel ein Spiel 19 zwischen dem zweiten Arm 8 und dem Halteteil 29 vorgesehen, welches es erlaubt, dass der zweite Arm 8 beim Aufsetzen auf das Werkstück 4 in Richtung Halteteil 29 verschoben werden kann, ohne am Halteteil 29 anzuschlagen. Wird die in Fig. 1 in der Ruhestellung bzw. im unbelasteten Zustand dargestellte Messgabel bzw. Einrichtung 1 auf das Werkstück 4 abgesenkt, so wird zu-nächst der zweite Arm 8 relativ zum ersten Arm 6 bzw. zum Halteteil 29 entsprechend, im gezeigten Ausführungsbeispiel vertikal, verschoben. Das bereits genannte Spiel 19 ist entsprechend groß ausgelegt. Vorzugsweise ist ein Spiel 19 von mindestens 2 mm vorgesehen. Beim Aufsetzen der beiden Arme 6 und 8 verformen sich die elastischen Verbindungselemente 14 ähnlich einem Parallelogramm. Damit dies funktioniert, ist der Aktuator 17 entsprechend stark ausgebildet. Durch diese Funktionalität des gezeigten Ausführungsbeispiels ist es möglich, dass die Einrichtung 1 vertikale Unebenheiten im Werkstück 4 ausgleichen kann, ohne dass es zu wesentlichen horizontalen Verschiebungen, also Änderungen des Abstandes 11 der Messarme 6 und 8 zueinander kommt und ohne dass einer der beiden Arme 6 und 8 bzw. ihre Spitzen 15 den Kontakt zum Werkstück 4 verliert. Weiters sorgen, sobald die Arme 6 und 8 mit ihren Spitzen 15 auf das Werkstück vollständig aufgesetzt sind, die elastischen Verbindungselemente 14 und 18, gegebenenfalls gemeinsam mit dem Aktuator 17, für einen entsprechenden Anpressdruck der Arme 6 und 8 auf das Werkstück 4.

Wird nun bei an das Werkstück 4 aufgedrückter Messgabel bzw. Einrichtung 1 das gesamte Werkstück 4 geringfügig horizontal verschoben, ein realistischer Wert liegt im Bereich von maximal +/- 0,5 mm, so gleichen die elastischen Verbindungselemente 18 zwischen dem ersten Arm 6 und dem Halteteil 29 diese Bewegung aus. Der Abstand 11 der Arme 6 und 8 zueinander bleibt dabei nahezu konstant. Diese bisher geschilderten Funktionalitäten der Einrichtung 1 haben noch nichts mit ihrer eigentlichen Überwachungsaufgabe zu tun, sondern dienen lediglich zur Vermeidung und Kompensation von Störeinflüssen vor und während des Überwachungsvorgangs. Die erfindungsgemäße Überwachung des Abstandes 11 zwischen dem ersten Arm 6 und dem zweiten Arm 8 erfolgt mittels der Messeinrichtung 10. Im gezeigten Ausführungsbeispiel liegt der Abstand 11 nach dem Aufsetzen der Arme 6 und 8 bzw. ihrer Spitzen 15 auf das Werkstück 4 in einer Größenordnung zwischen 3 mm und 4 mm. Dieser anfängliche Abstandswert wird von der Messeinrichtung 10 gemessen und im gezeigten Ausführungsbeispiel anschließend als Referenzabstand verwendet. Der eigentliche Sägevorgang mittels des Sägewerkzeugs 13 beginnt günstigerweise nach Bestimmung dieses Referenzabstandes. Kommt es nun beim Einsägen des Schnittkanals 5 in das Werkstück 4 zu einer Änderung der Öffnungsweite 2 des Schnittkanals 5, so führt dies zu einer Änderung des Abstandes 11 zwischen den Armen 6 und 8. Die jeweils gemessenen Abstandswerte 11 werden im gezeigten Ausführungsbeispiel dazu verwendet, um relative Änderungen, bezogen auf den Referenzabstand, zu berechnen. Überschreiten diese relativen Abstandsänderungen einen vorgebbaren Schwellwert, so kann die Regel- bzw. Steuereinrichtung der Sägeeinrichtung 3 den Sägevorgang abbrechen, das Sägewerkzeug 13 zurückziehen oder absenken oder eine andere, für diesen Fall vorgesehene Maßnahme einleiten. Dies gilt insbesondere dann, wenn die mittels der Messeinrichtung 10 bestimmten Relativänderungen des Abstandes 11 eine übermäßige Verkleinerung der Öffnungsweite 2 des Schnittkanals 5 anzeigen. Abweichend vom gezeigten Ausführungsbeispiel ist es natürlich auch denkbar, nicht die Relativänderung des Abstandes 11 sondern die Absolutwerte des Abstandes 11 zu messen und auszuwerten.

Die Messflächen 43 und 44 der Messeinrichtung 10 bzw. des zweiten Armes 8 sind im gezeigten Ausführungsbeispiel so ausgebildet, dass eine vertikale Verschiebung der beiden Arme 6 und 8 relativ zueinander keine wesentliche Änderung des Messergebnisses bewirkt.

Der bereits genannte Schwellwert der Relativänderung des Abstandes 11 ist abhängig vom zu schneidenden Material, dem verwendeten Sägewerkzeug 13 und der Leistungsreserve der hier nicht im Detail dargestellten Antriebe des Sägewerkzeugs 13. Die Schwellwerte können für verschiedene Sägewerkzeuge 13 und Materialien des Werkstücks und auch in Abhängigkeit von anderen Parametern in einer Datenbank der zentralen Steuerung bzw. Regelung der Sägeeinrichtung 3 abgelegt sein.

Im gezeigten Ausführungsbeispiel, wie dies es insbesondere in Fig. 1 gezeigt ist, sind die Arme 6 und 8 als im Wesentlichen in sich steife Körper ausgeführt. Die Änderungen des Abstandes 11 ergeben sich durch ein Verschwenken des zweiten Armes 8 gegen den ersten Arm 6 in dem durch die elastischen Verbindungselemente 14 im Befestigungsbereich 20 ausgebildeten Schwenkgelenk. Dieses stellt auch die elastischen Rückstellkräfte zur Verfügung, die die Arme 6 und 8 wieder in die Ausgangsstellung bringen, wenn auf sie keine äußeren Kräfte wirken. Gelenk und Rückstellung können natürlich auch räumlich getrennt voneinander ausgeführt sein. Der Vollständigkeit halber sei darauf hingewiesen, dass die Arme 6 und 8 auch in Form einer einteiligen Konstruktion, z. B. aus Stahl, ausgeführt sein könnten, wobei die elastischen Eigenschaften des Materials dieser Konstruktion durch entsprechende Materialwahl und Formgebung erreicht werden können und auch so eine Änderung und auch elastische Rückstellung des Abstandes 11 möglich wird.

Fig. 2 zeigt eine Ansicht entlang der Schnittlinie 16 auf die Sägeeinrichtung 3, wobei das Sägewerkzeug 13 bereits einen Schnittkanal 5 in das Werkstück 4 gesägt hat. Die Seitenwangen 27 des an sich bekannten Druckbalkens sind auf das Werkstück 4 abgesenkt, um dieses an den Auflagetisch 28 der Sägeeinrichtung 3 anzupressen. Auch die erfindungsgemäße Einrichtung 1 wurde bereits entlang der Horizontalführung 26 an den Anfang des Schnittkanals 4 gefahren und vom Aktuator 17 mit beiden Armen 6 und 8 an das Werkstück 2 angedrückt. In Fig. 2 ist dabei besonders gut zu sehen, dass der erste Arm 6 nach dem Aufsetzen der Einrichtung 1 auf das Werkstück 4 auf einer ersten Seite 7 des Schnittkanals 5 und der zweite Arm 8 auf einer der ersten Seite 7 gegenüberliegenden zweiten Seite 9 des Schnittkanals 5 angeordnet ist. Das hier in Form eines Kreissägeblattes ausgeführte Sägewerkzeug 13 kann durch den Spalt 12 zwischen den beiden Armen 6 und 8 beim Sägevorgang hindurchgeführt werden, ohne dass hierdurch die Überwachung der Öffnungsweite 2 des Schnittkanals 5 mittels der Einrichtung 1 behindert wird.

Fig. 3 zeigt eine Seitenansicht auf die in Fig. 2 dargestellte Situation. Das als Kreissägeblatt ausgebildete Sägewerkzeug 13 rotiert beim Sägevorgang in der Rotationsrichtung 30 und wird von einem hier nicht dargestellten Antrieb entlang der Schnittlinie 16 in Vorschubrichtung 31 verfahren. In Fig. 3 ist besonders gut zu sehen, dass die erfindungsgemäße Messgabel bzw. Einrichtung 1 im Bereich des Anfangs des Schnittkanals 5 auf das Werkstück 4 abgesenkt wurde, um insbesondere während des Einsägens des Sägewerkzeugs 13 die Öffnungsweite 2 des Schnittkanals 5 überwachen zu können. Ein hier nicht explizit dargestellter Antrieb sorgt dafür, dass die Einrichtung 1 mit ihrem Aktuator 17 entlang der Horizontalführung 26 an die benötigte Stelle gefahren werden kann. Im gezeigten Ausführungsbeispiel ist bzw. sind, wie auch bei anderen bevorzugten Ausgestaltungsformen, ein oder mehrere Spaltkeile 32 vorgesehen. Diese sind ebenfalls in den Verstellrichtungen 34 entlang der Horizontalführung 26 und damit entlang der Schnittlinie 16 verfahrbar. Sie können mittels des Spaltkeilaktuators 33 in den Schnittkanal 5 abgesenkt werden, wenn das Sägewerkzeug 13 entsprechend weit in das Werkstück 4 eingeschnitten ist. Im gezeigten Ausführungsbeispiel verhindert der abgesenkte Spaltkeil 32, wenn er erst einmal in den Schnittkanal 5 eingeführt ist, eine Einengung der Öffnungsweite 2 des Schnittkanals 5, so dass die Überwachung mittels der erfindungsgemäßen Einrichtung 1 nicht mehr notwendig ist. Diese kann daher dann vom Aktuator 17 vom Werkstück 4 abgehoben werden. Beim gezeigten Ausführunasbeispiel sind der dargestellte Spaltkeil 32 und die erfindungsgemäße Einrichtung 1 bezüglich ihrer Bewegung in Verstellrichtung 34 entlang der Horizontalführung 26 miteinander zwangsgekoppelt. Dies muss aber natürlich nicht so sein. Es können auch noch zusätzliche, in den Verstellrichtungen 34 verschiebbare oder auch stationäre Spaltkeile 32 vorgesehen sein. Es ist auch denkbar, vollständig auf Spaltkeile 32 zu verzichten und/oder mit der Einrichtung 1 während des gesamten Sägevorgangs die Öffnungsweite 2 zu überwachen. Hierzu ist es denkbar, dass die Einrichtung 1 in entsprechenden Intervallen dem Sägefortschritt des Sägewerkzeugs 13 nachgeführt wird. Hierzu kann vorgesehen sein, dass die Einrichtung 1 jeweils abgehoben, in Vorschubrichtung 31 nachgefahren und wieder auf das Werkstück 4 abgesenkt wird.

Der Vollständigkeit halber wird darauf hingewiesen, dass es ebenfalls denkbar ist, dass die Arme 6 und 8 der erfindungsgemäßen Einrichtung 1 nicht von oben sondern seitlich oder von unten an das Werkstück 4 angepresst werden.

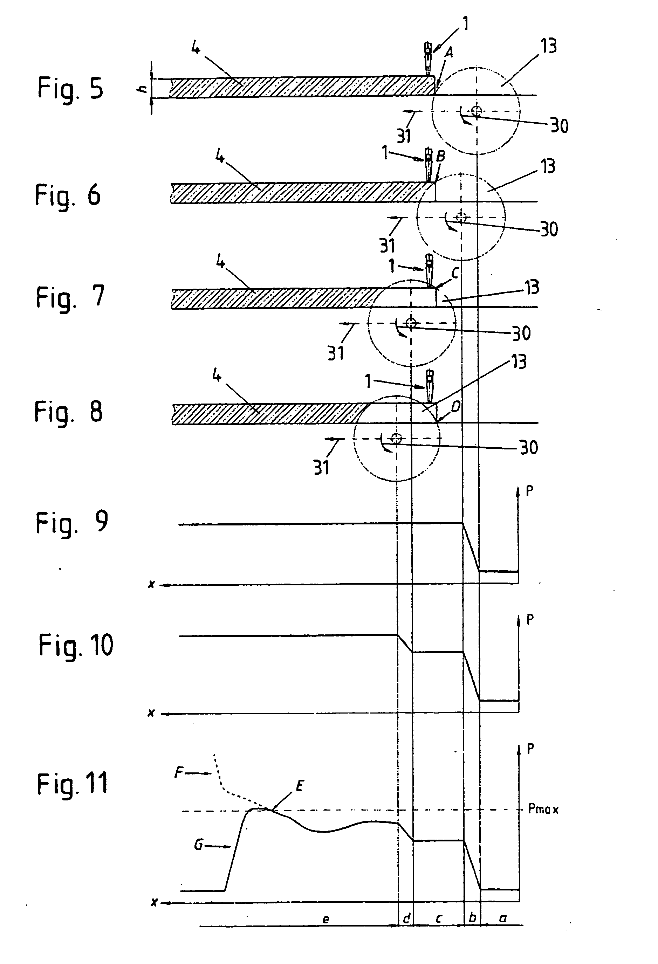

Wie bereits geschildert, kann man ausschließlich die Einrichtung 1 bzw. Messgabel dazu verwenden, die Öffnungsweite 2 des Schnittkanals 5 zu überwachen, um ein Einklemmen des Sägewerkzeugs 13 zu verhindern. Eine bevorzugte Ausgestaltungsform der Erfindung sieht jedoch ein Verfahren vor, bei dem die Einrichtung 1 in Kombination mit einer Überwachung der Antriebsleistung des Antriebs für das Sägewerkzeug 3 zur Überwachung der Öffnungsweise 2 eingesetzt wird. Im Folgenden wird geschildert, wie mit Hilfe der Überwachung des Abstandes 11 mittels der Einrichtung 1 und aus dem Verlauf der Antriebsleistung für das Sägewerkzeug 13 wertvolle Informationen für das funktionssichere Arbeiten der Sägeeinrichtung 3 gewonnen werden können. Um die vorgeschlagene Arbeitsweise der Sägeeinrichtung 3 verständlich zu erklären, müssen zunächst das Schneidwerkzeug 13 und die aufgenommene Antriebsleistung für das Sägewerkzeug 13 in verschiedenen Betriebsstellungen betrachtet werden. In den Fig. 5 bis 8 sind verschiedene Situationen beim Einschneiden des Sägewerkzeuges 13 in das Werkstück 4 dargestellt. Bei den nachfolgenden Erläuterungen wird vom gezeigten Ausführungsbeispiel ausgegangen, bei dem das Sägewerkzeug 13 in Form eines an sich bekannten Kreissägeblattes ausgebildet ist. Bei diesem sind am Stammblatt 45, wie an sich bekannt, umfangsmäßig eine Abfolge von Sägezähnen 46 angeordnet. Die Breite s1 der Sägezähne 46 in Richtung parallel zur Rotationsachse des Sägeblattes ist größer als die Dicke s2 des Stammblattes 45 in Richtung parallel zur Rotationsachse des Sägeblattes. Dies ist in den Fig. 12 und 13 der Vollständigkeit halber veranschaulicht, obwohl solche Kreissägeblätter hinlänglich bekannt sind. Auch für andere Sägewerkzeuge 13 wie z.B. Bandsägen mit Stammblatt und Sägezähnen gilt entsprechendes.

In den Fig. 5 bis 8 ist die Einrichtung 1 zur Überwachung der Öffnungsweite 2 des in das Werkstück 4 einzusägenden Schnittkanals 5 bereits auf das Werkstück 4 aufgesetzt. Die Messung des Referenzabstandes hat bereits stattgefunden. Fig. 5 zeigt die Situation, in der das Sägewerkzeug 13 beginnt, im Punkt A in das Werkstück 4 einzudringen. In Fig. 6 ist der Schnitt so weit fortgeführt, dass das Sägewerkzeug 13 beginnt, das Werkstück auf seiner vollen Dicke h zu durchtrennen (Punkt B). In Fig. 7 ist der Schnittkanal 5 so weit fortgeschritten, dass die aufsteigenden Zähne auf der Rückseite des Sägeblattes bzw. Sägewerkzeuges 13 mit dem sogenannten Nachschneiden beginnen, falls die Öffnungsweite 2 des Schnittkanals 5 sich entsprechend verringert hat. Unter Nachschneiden versteht man den Prozess, wenn die wieder aufsteigenden Sägezähne 46 des Sägewerkzeuges 13 am, in Vorschubrichtung 31 gesehen hinteren Ende des Sägewerkzeugs 13 beginnen, in das Werkstück einzuschneiden, und damit den verengten Schnittkanal 5 wieder zu weiten. In Fig. 8 erfassen die aufsteigenden Zähne des Sägewerkzeuges 13 das Werkstück über seine gesamte Dicke h. Ab diesem Punkt d ist somit ein Nachschneiden über die gesamte Dicke h des Werkstücks 4 möglich, wenn sich die Öffnungsweite 2 entlang des Schnittkanals 5 entsprechend verringert hat.

In den Fig. 9 bis 11 sind nun verschiedene Verläufe der vom Antrieb des Sägewerkzeuges 13 aufgenommenen Leistungen P in Abhängigkeit der Position x der Rotationsachse des Sägewerkzeuges 13 entlang der Schnittlinie 16 aufgezeichnet. Die vertikalen Linien erleichtern die örtliche Zuordnung. P stellt die von dem hier nicht explizit gezeigten aber an sich bekannten Antrieb, welcher das Sägewerkzeug 13 rotieren lässt, aufgenommene Leistung dar. Diese ist mit beim Stand der Technik bekannten Mitteln messbar. Bevor das Sägewerkzeug 13 in das Werkstück 4 einzudringen beginnt, befindet sich das Sägewerkzeug 13 im Leerlauf. Die Antriebsleistung P ist hier konstant auf niedrigem Niveau. Es handelt sich um den Bereich a. Auf dem Weg von der Situation gem. Fig. 5 zur Situation gem. Fig. 6 steigt die Antriebsleistung P im Bereich b an. c beschreibt den Bereich nach dem Erreichen der vollen Werkstückdicke h, also die Situation zwischen den Fig. 6 und 7. Solange es nicht zum Verklemmen des Sägewerkzeugs 13 kommt und die Öffnungsweite 2 des Schnittkanals 5 größer als die Dicke des Stammblattes 45 des Sägewerkzeuges 13 ist, bleibt die Antriebsleistung im Bereich c konstant. Die Wegstrecke d entlang der Schnittlinie 16 ist der Bereich, in dem das oben geschilderte Nachschneiden beginnen kann. Kommt es zum Nachschneiden, so steigt hier, wie in den Fig. 10 und 11 zu sehen, die vom Antrieb des Sägewerkzeugs 13 aufgenommene Antriebsleistung P nochmals an. Im Anschluss im Bereich e befindet sich das gesamte Sägewerkzeug 13 im Werkstück 4. Je nach Öffnungsweite 2 des Schnittkanals 5 kommt es zum Nachschneiden oder nicht. Fig. 9 zeigt einen Leistungsverlauf im Idealzustand ohne Nachschneiden. Dies stellt somit die Situation dar, wenn es zu keinem oder nur zu unwesentlichem Einengen der Öffnungsweite 2 des Schnittkanals 5 kommt. Fig. 10 zeigt ein Beispiel, bei dem die Öffnungsweite 2 des Schnittkanals 5 sich so weit einengt, dass es zu einem Nachschneiden kommt. In Fig. 10 ist dabei eine Situation dargestellt, bei der es sich um eine konstante Einengung des Schnittkanals 5 handelt, so dass die Antriebsleistung P im Bereich e konstant auf einem erhöhten Niveau bleibt. Die Erhöhung der Antriebsleistung P ist um so größer, je stärker das Nachschneiden ist. Der in Fig. 10 dargestellte Fall ist eher selten. In der Regel verursachen Materialspannungen eher über den Weg x schwankende Einengungen des Schnittkanals 5. Beispiele hierfür sind in Fig. 11 dargestellt. Ein funktionskritischer Zustand für den Betrieb der Sägeeinrichtung 3 wird insbesondere dann erreicht, wenn sich der Schnittkanal im Bereich, in dem sich das Stammblatt 45 befindet, so stark einengt, dass das Stammblatt 45 des Sägewerkzeugs 13 eingeklemmt wird. Dies führt infolge der Reibung zwischen Werkstück und Stammblatt 45 zu einem sehr starken Anstieg der erforderlichen Antriebsleistung P des Sägewerkzeugs 13 und, je nach Leistungsreserve der Sägeeinrichtung 3, zum Stillstand bzw. Festklemmen des Sägewerkzeuges 13 im Schnittkanal 5. Dabei wird das Sägewerkzeug 13 häufig beschädigt oder zerstört und die Sägeeinrichtung 3 selbst wird extremen Belastungen ausgesetzt. In Fig. 11 ist eine solche Situation strichliert dargestellt und mit den Buchstaben F bezeichnet. Das Herannahen solcher Situationen gilt es rechtzeitig zu erkennen, um ein Festklemmen des Sägewerkzeugs 13 rechtzeitig verhindern zu können. Die Praxis zeigt, dass dies alleine durch Überwachen der Antriebsleistung P nicht möglich ist, da aus einer entsprechenden Überwachung allein der Antriebsleistung P ein entsprechend kritischer Zustand oft erst zu spät erkannt werden kann. Wird der kritische Zustand zu spät erkannt, so kann das Sägewerkzeug 13 nicht mehr kontrolliert aus dem Schnittkanal 5 gefahren werden, um eine Beschädigung oder einen Stillstand zu vermeiden. Die erfindungsgemäße Einrichtung 1 liefert die Möglichkeit, ein mögliches Klemmen am Stammblatt 45 des Sägewerkzeuges 13 rechtzeitig zu erkennen, um rechtzeitig entsprechende Gegenmaßnahmen einleiten zu können, um dadurch die Funktionssicherheit der Sägeeinrichtung 3 wesentlich zu erhöhen. Hierzu wird die Messgabel bzw. Einrichtung 1, wie in Fig. 5 gezeigt, vor Beginn des Schnittvorgangs auf das Werkstück 4 aufgesetzt. Bei Relativmessungen wird der entsprechende Referenzwert des Abstandes 11 genommen. Dann kann mittels der Einrichtung 1 in der geschilderten Art und Weise die Öffnungsweite 2 des Schnittkanals 5 von Beginn des Schnitt- bzw. Sägevorgangs an überwacht werden. Gleichzeitig kann die Antriebsleistung P des Sägewerkzeugs 13 überwacht werden.

Besonders kritisch ist der Bereich c zwischen der Situation in Fig. 6 und derjenigen in Fig. 7. In diesem Bereich kann die überwachte Antriebsleistung P keine rechtzeitigen Hinweise auf eine kritische Einengung der Öffnungsweite 2 des Schnittkanals 5 liefern. Wird in diesem Abschnitt des Sägevorgangs die Öffnungsweite 2 so weit eingeengt, dass die Seitenwände des Werkstücks 4 bzw. Schnittkanals 5 auf das Stammblatt 45 des Sägewerkzeuges 13 treffen, so wirkt dies wie eine Scheibenbremse, was bei entsprechenden Kräften zum sofortigen Abbremsen bzw. Stillstand des Sägewerkzeuges 13 führen kann. Dies kann zur Zerstörung oder erheblichen Beschädigungen an Sägewerkzeug 13 und/oder Sägeeinrichtung 3 führen. Insbesondere in diesem Bereich kann die bereits geschilderte Überwachung mittels der erfindungsgemäßen Einrichtung 1 rechtzeitig vor einer kritischen Einengung der Öffnungsweite 2 warnen, um diese Situation zu vermeiden.

Aus den geometrischen Abmessungen der Sägeeinrichtung 3 des Sägewerkzeuges 13 und des Werkstückes 4 kann z. B. von einer zentralen Regelung oder Steuerung der Sägeeinrichtung 3 errechnet werden, ab wann Punkt d gem. Fig. 8 erreicht ist, also ein Nachschneiden mit den aufsteigenden Zähnen über die gesamte Dicke h des Werkstückes 4 erfolgen könnte. Mit Hilfe der Messgabel bzw. Einrichtung 1 kann einem im Bereich d und/oder e erfolgenden Leistungsanstieg infolge des Nachschneidens nun eine entsprechende Einengung der Öffnungsweite 2 zugeordnet werden. Analog zu einem maximal zulässigen Wert der Einengung der von der Einrichtung 1 bestimmten Öffnungsweite 2 kann daraus auch für den Leistungsanstieg ein maximal zulässiger Wert Pmax festgelegt und in einer Datenbank der Sägeeinrichtung 3 abgelegt werden. Die Kriterien für die Definition des Pmax für den Leistungsanstieg können dieselben sein, wie bei der Festlegung des Schwellwertes für die Öffnungsweite 2 (z. B. zu schneidendes Material, Art des Sägewerkzeuges, Leistungsreserve der Maschine, Schnittgeschwindigkeit und Vorschub). Nachdem der Leistungsschwellwert Pmax in Abhängigkeit der Messwerte der Einrichtung 1 festgelegt wurde, kann nun während des weiteren Sägevorgangs ein Einklemmen des Sägeblattes effektiv verhindert werden, ohne dass man dabei weiterhin auf die Einrichtung 1 bzw. Messgabel angewiesen ist. Ein Beispiel dafür ist in Fig. 11 im Bereich e dargestellt. Der zulässige Schwellwert Pmax ist dort eingezeichnet. Im Punkt E überschreitet die Antriebsleistung P diesen Wert, woraufhin die Sägeeinrichtung 3 entsprechende Gegenmaßnahmen einleitet, welche z. B. eine Verringerung des Vorschubs oder ein Zurückziehen bzw. Absenken des Sägewerkzeuges 13 sein können. Der mit dem Buchstaben G bezeichnete Bereich zeigt einen typischen Verlauf der Antriebsleistungen P, wenn das Sägewerkzeug abgesenkt wird. Ein Festklemmen des Sägewerkzeuges 13 ist hier erfolgreich verhindert.

### Legende

zu den Hinweisziffern:
- 1: Einrichtung
- 2: Öffnungsweite
- 3: Sägeeinrichtung
- 4: Werkstück
- 5: Schnittkanal
- 6: erster Arm
- 7: erste Seite
- 8: zweiter Arm
- 9: zweite Seite
- 10: Messeinrichtung
- 11: Abstand
- 12: Spalt
- 13: Sägewerkzeug
- 14: elastisches Verbindungselement
- 15: Spitze
- 16: Schnittlinie
- 17: Aktuator
- 18: elastisches Verbindungselement
- 19: Spiel
- 20: Befestigungsbereich
- 21: Abstand
- 22: Abstand
- 23: Schutzabdeckung
- 24: Horizontalabstand
- 25: Vertikalabstand
- 26: Horizontalführung
- 27: Seitenwangen
- 28: Auflagentisch
- 29: Halteteil
- 30: Rotationsrichtung

- 31: Vorschubrichtung
- 32: Spaltkeil
- 33: Spaltkeilaktuator
- 34: Verstellrichtung
- 35: Längsachse
- 36: Aufnahme (für 14)
- 37: elastisches Material
- 38: Grundplatte
- 39: Aufnahme
- 40: Deckplatte
- 41: Zapfen
- 42: Bereich
- 43: Messfläche
- 44: Messfläche
- 45: Stammblatt
- 46: Sägezahn

## Patentansprüche

1. Einrichtung (1) zur Überwachung der Öffnungsweite (2) eines von einem Sägewerkzeug (13) einer Sägeeinrichtung (3) in zumindest ein Werkstück (4) einzusägenden Schnittkanals (5), wobei die Einrichtung (1) zumindest einen ersten Arm (6) zum Aufsetzen auf das Werkstück (4) auf einer ersten Seite (7) des Schnittkanals (5) und zumindest einen zweiten Arm (8) zum Aufsetzen auf das Werkstück (4) auf einer der ersten Seite (7) gegenüberliegenden zweiten Seite (9) des Schnittkanals (5) aufweist, **dadurch gekennzeichnet, dass** die Einrichtung (1) eine Messeinrichtung (10) zur Überwachung eines Abstandes (11) zwischen dem ersten Arm (6) und dem zweiten Arm (8) aufweist.

2. Einrichtung (1) nach Anspruch 1, **dadurch gekennzeichnet, dass** die Messeinrichtung (10) eine Einrichtung zur, vorzugsweise berührungslosen, Messung des Abstandes (11), vorzugsweise ein induktiver Sensor, ist.

3. Einrichtung (1) nach Anspruch 1 oder 2, **dadurch gekennzeichnet, dass** die Messeinrichtung (10) eine Messeinrichtung zur Bestimmung von Änderungen des Abstandes (11) relativ zu einem, vorzugsweise zu Beginn der Überwachung messbaren oder gemessenen, Referenzabstand ist.

4. Einrichtung (1) nach einem der Ansprüche 1 bis 3, **dadurch gekennzeichnet, dass** zwischen den Armen (6, 8) zumindest bereichsweise ein Spalt (12) zum Hindurchführen eines Sägewerkzeugs (13), vorzugsweise eines Sägeblatts, angeordnet ist.

5. Einrichtung (1) nach einem der Ansprüche 1 bis 4, **dadurch gekennzeichnet, dass** die Arme (6, 8) mittels zumindest eines elastischen, vorzugsweise zumindest ein Schwenkgelenk bildenden, Verbindungselementes (14) miteinander verbunden sind und/oder dass zumindest einer der Arme (6, 8) elastisch verbiegbar ausgebildet ist.

6. Einrichtung (1) nach Anspruch 5, **dadurch gekennzeichnet, dass** das Verbindungselement (14) ein Verschwenken und/oder ein Verschieben der Arme (6, 8) relativ zueinander gegen eine elastische Rückstellkraft ermöglicht.

7. Einrichtung (1) nach einem der Ansprüche 1 bis 6, **dadurch gekennzeichnet, dass** die Einrichtung (1) zumindest eine unbelastete Betriebsstellung aufweist, in der ein zur Auflage am Werkstück (4) vorgesehenes Ende eines der Arme (6, 8) gegenüber einem zur Auflage am Werkstück (4) vorgesehenen Ende des anderen der Arme (6, 8) vorsteht.

8. Einrichtung (1) nach einem der Ansprüche 1 bis 7, **dadurch gekennzeichnet, dass** an zumindest einem, vorzugsweise an allen, der Arme (6, 8), an dessen bzw. deren zur Auflage am Werkstück (4) vorgesehenen Ende eine Spitze (15) oder eine Reibungskontaktfläche angeordnet ist.

9. Sägeeinrichtung (3), insbesondere Plattenaufteilanlage, mit einer Einrichtung (1) nach einem der Ansprüche 1 bis 8.

10. Sägeeinrichtung (3) nach Anspruch 9, **dadurch gekennzeichnet, dass** die Einrichtung (1), vorzugsweise motorbetrieben, heb- und senkbar und/oder entlang einer Schnittlinie der Sägeeinrichtung (3), vorzugsweise motorbetrieben, verschiebbar ist und/oder die Einrichtung (1) zumindest im Bereich eines Eintritts des Sägewerkzeugs (13), insbesondere Sägeblatts, der Sägeeinrichtung (3) ins Werkstück (4) anordenbar ist.

## Claims

1. A device (1) for monitoring the opening width (2) of a cut channel (5) to be sawn in at least one workpiece (4) by a sawing tool (13) of a sawing device (3), wherein the device (1) has at least one first arm (6) for placing on the workpiece (4) on a first side (7) of the cut channel (5) and at least one second arm (8) for placing on the workpiece (4) on a second side (9), opposite the first side (7) of the cut channel (5), **characterized in that** the device (1) has a measuring device (10) for monitoring a distance (11) between the first arm (6) and the second arm (8).

2. A device (1) according to claim 1, **characterized in that** the measuring device (10) is a device for the, preferably contactless, measurement of the distance (11), preferably an inductive sensor.

3. A device (1) according to claim 1 or 2, **characterized in that** the measuring device (10) is a measuring device to determine changes in the distance (11) relative to a reference distance, preferably measurable or measured at the beginning of monitoring.

4. A device (1) according to any one of claims 1 to 3, **characterized in that** between the arms (6, 8) there is arranged, at least in regions, a gap (12) for the guiding through of a sawing tool (13), preferably a saw blade.

5. A device (1) according to any one of claims 1 to 4, **characterized in that** the arms (6, 8) are connected to one another by means of at least one resilient connecting element (14), preferably forming at least one swivel joint, and/or **in that** at least one of the arms (6, 8) is resiliently bendable.

6. A device (1) according to claim 5, **characterized in that** the connecting element (14) enables a pivoting and/or a displacement of the arms (6, 8) relative to one another against a resilient restoring force.

7. A device (1) according to any one of claims 1 to 6, **characterized in that** the device (1) has at least one unloaded operating position in which an end, intended for placement on the workpiece (4), of one of the arms (6, 8) projects with respect to an end, intended for placement on the workpiece (4), of the other arm (6, 8).

8. A device (1) according to any one of claims 1 to 7, **characterized in that** a point (15) or a friction contact surface is arranged on at least one, preferably all, of the arms (6, 8) at the end thereof intended for placement on the workpiece (4).

9. A sawing device (3), in particular panel sizing equipment, having a device (1) according to any one of claims 1 to 8.

10. A sawing device (3) according to claim 9, **characterized in that** the device (1) is raisable and lowerable, preferably motor-driven, and/or is displaceable along a cutting line of the sawing device (3), preferably motor-driven, and/or the device (1) is arrangeable at least in the region of an entry of the sawing tool (13), in particular saw blade, of the sawing device (3) into the workpiece (4).

## Revendications

1. Dispositif (1) pour la surveillance de la largeur d'ouverture (2) d'un canal de coupe (5) à scier dans au moins une pièce (4) au moyen d'un outil de sciage (13) d'un dispositif de sciage (3), dans lequel le dispositif (1) comporte au moins un premier bras (6) à appliquer sur la pièce (4) sur un premier côté (7) du canal de coupe (5) et au moins un deuxième bras (8) à appliquer sur la pièce (4) sur un deuxième côté (9) du canal de coupe (5) opposé au premier côté (7), **caractérisé en ce que** le dispositif (1) présente un dispositif de mesure (10) pour la surveillance d'une distance (11) entre le premier bras (6) et le deuxième bras (8).

2. Dispositif (1) selon la revendication 1, **caractérisé en ce que** le dispositif de mesure (10) pour la mesure, de préférence sans contact, de la distance (11), est de préférence un détecteur inductif.

3. Dispositif (1) selon la revendication 1 ou 2, **caractérisé en ce que** le dispositif de mesure (10) est un dispositif de mesure pour la détermination de changements de la distance (11) par rapport à une distance de référence mesurable ou mesurée, de préférence au commencement de la surveillance.

4. Dispositif (1) selon l'une quelconque des revendications 1 à 3, **caractérisé en ce qu'**une fente (12) pour le guidage d'un outil de sciage (13), de préférence d'une lame de scie, est disposée au moins localement entre les bras (6, 8).

5. Dispositif (1) selon l'une quelconque des revendications 1 à 4, **caractérisé en ce que** les bras (6, 8) sont assemblés l'un à l'autre au moyen d'au moins un élément d'assemblage élastique (14), formant de préférence au moins une articulation pivotante, et/ou **en ce qu'**au moins un des bras (6, 8) est de configuration élastiquement flexible.

6. Dispositif (1) selon la revendication 5, **caractérisé en ce que** l'élément d'assemblage (14) permet un pivotement et/ou un glissement relatif des bras (6, 8) l'un par rapport à l'autre contre une force de rappel élastique.

7. Dispositif (1) selon l'une quelconque des revendications 1 à 6, **caractérisé en ce que** le dispositif (1) présente au moins une position de fonctionnement sans charge, dans laquelle une extrémité d'un des bras (6, 8), pour être appliquée sur la pièce (4), est saillante par rapport à une extrémité de l'autre des bras (6, 8) prévue pour être appliquée sur la pièce (4).

8. Dispositif (1) selon l'une quelconque des revendications 1 à 7, **caractérisé en ce qu'**une pointe (15) ou une face de contact par friction est disposée sur au moins un, de préférence sur la totalité des bras (6, 8), à son/leur extrémité prévue pour être appliquée sur la pièce (4).

9. Dispositif de sciage (3), en particulier installation de découpage de panneaux, comportant un dispositif (1) selon l'une quelconque des revendications 1 à 8.

10. Dispositif de sciage (3) selon la revendication 9, **caractérisé en ce que** le dispositif (1) est relevable et abaissable, de préférence de façon motorisée, et/ou déplaçable, de préférence de façon motorisée, le long d'une ligne de coupe du dispositif de sciage (3), et/ou le dispositif (1) peut être disposé au moins dans la région d'une entrée de l'outil de sciage (13), en particulier d'une lame de scie, du dispositif de sciage (3) dans la pièce (4).
